Europäisches Patentamt

European Patent Office

Office européen des brevets

(11) Numéro de publication: **0 345 402**
**A1**

## (12) DEMANDE DE BREVET EUROPEEN

(21) Numéro de dépôt: **88401415.0**

(22) Date de dépôt: **10.06.88**

(51) Int. Cl.⁴: **C08L 95/00**

(43) Date de publication de la demande:
**13.12.89 Bulletin 89/50**

(84) Etats contractants désignés:
**AT BE CH DE ES FR GB GR IT LI LU NL SE**

(71) Demandeur: **ETANCHEITE TUNISIENNE**
**10 rue Senateur Gallini**
**TN-1002 Tunis(TN)**

(72) Inventeur: **Berrebi, Mardochée**
**28 rue du Docteur Conseil**
**1001 Tunis Belvédère(TN)**

(74) Mandataire: **Portal, Gérard et al**
**Cabinet Beau de Loménie 55, rue**
**d'Amsterdam**
**F-75008 Paris(FR)**

(54) **Procédé de fabrication d'une membrane d'étanchéité à base d'un mélange d'élastomères SBS et plastomères polypropylène atactique et de bitumes de distillation.**

(57) La présente invention est caractérisée par un procédé de fabrication d'une membrane d'étanchéité à base d'un mélange ternaire qui associe l'élastomère SBS et plastomère polypropylène atactique et de bitumes de distillation directe Les additifs constitués d'huiles spéciales assurent la compatibilité des éléments et la stabilité du mélange. La membrane d'étanchéité selon le procédé ne nécessite pas de protection de surface et s'accommode à une exposition directe aux imtempéries; elle est soudable à la flamme et (ou) collable au bitume à chaud.

EP 0 345 402 A1

# PROCEDE DE FABRICATION D'UNE MEMBRANE D'ETANCHEITE A BASE D'UN MELANGE D'ELASTOMERES SBS ET PLASTOMERES POLYPROPYLENE ATACTIQUE ET DE BITUMES DE DISTILLATION

La présente invention est caractérisée par un procédé de fabrication d'une membrane d'étanchéité à base d'un mélange d'élastomères SBS et plastomères polypropylène atactique et de bitumes de distillation.

Les membranes d'étanchéité actuellement disponibles appartiennent à deux familles nettement distinctes, à savoir :

1°) Les SBS/bitumes, qui se caractérisent par un excellent pliage à froid (-20° C), une aptitude au collage au bitume et nécéssitent une protection de surface.

2°) Les APP/bitumes, qui se caractérisent par un pliage à froid moindre (-10° C), une meilleure stabilité à chaud (BA > 140° C), sont soudables et ne nécésitent pas une protection de surface.

Le procédé relatif à la présente invention se caractérise par un mélange ternaire qui associe les bitumes de distillation directe tels que le 40/50, le 80/100 ou le 180/200 (la proportion de bitume utilisée est de 45 à 75% du mélange) au groupe d'élastomères styrène butadiène et aux plastomères de la famille du polypropylène.

Les élastomères sont de la famille des styrènes butadiène dont les plus connus dans l'étanchéité sont désignés sous le nom de SBS. Les élastomères interviennent dans une proportion de 5 à 15% du mélange.

Les plastomères sont représentés par la famille d'homopolymères et de copolymères du propylène atactique (APP). Ces plastomères interviennent dans 6 à 18% du mélange. Les polymères isotactiques, en particulier, le P.I. ou IPP interviennent dans le mélange dans une proportion qui peut atteindre 5%.

Les additifs sont des huiles spéciales qui interviennent jusqu'à 15% du mélange. Ils assurent la compatibilité des éléments et la stabilité du mélange.

Les charges employées traditionnellement dans les matériaux d'étanchéité peuvent être utilisées dans le procédé, objet de la présente invention.

Les charges représentent jusqu'à 20% du mélange. Le mélange ternaire décrit ci-dessus, objet de la présente invention est placé dans un fondeur jusqu'à ce que soit atteinte la fusion complète des composants.

Ce mélange ternaire est alors transféré du fondeur au mélangeur.

Le mélangeur de type particulier permet d'homogénéiser et d'affiner le mélange sans introduction d'air et à une température constante de l'ordre de 200° C.

Le mélange ternaire décrit c-dessus, objet de la présente invention peut aussi bien être placé dans un fondeur-mélangeur.

Le mélange obtenu aura alors comme caractéristiques essentielles :

1 - bille-anneau : > à 145° C

2 - pliage à froid : la température de non fissuration est au plus égale à - 20° C.

3 - écoulement à la chaleur : > à 160° C.

Le mélange ternaire, homogène et affiné est admis dans un bac d'imprégnation où il est entretenu à une température constante.

Les armatures sont disposées de manière à tremper dans le bac d'imprégnation en vue d'être imprégnées et enrobées. Ainsi, il peut être obtenu des membranes de toutes largeurs et d'épaisseurs comprises entre environ 1 et 7 mm.

La nature des armatures utilisées est importante par rapport aux caractéristiques mécaniques recherchées.
Indifféremment, toute armature susceptible d'être imprégnée ou enrobée ou contrecollée, pourra être employée.

A titre indicatif et sans que cette liste soit exhaustive, les armatures peuvent être en voile de verre, tissu de verre, mate de verre, grille de verre, feutre non tissé de polyester ou de tout autre polymère, grille de polymère, film de polymère, film de polyéthylène, toile de jute, etc. Le matériau, objet de la présente invention peut être monoarmé, biarmé ou triarmé.
A sa sortie du bac d'imprégnation, la membrane d'étanchéité, objet de la présente invention, constituée par les armatures imprégnées et enrobées, doit être refroidie par un système quelconque de refroidissement, à savoir :
- immersion
- flottaison
- aspersion ou une combinaison quelconque de ces moyens ou par tout autre moyen, qu'il s'appuie sur un liquide de refroidissement ou sur un gaz ou une combinaison des deux (par exemple : eau - air).

La membrane d'étanchéité, objet de la présente invention, peut recevoir un traitement de surface nécéssaire au bon stockage et à la bonne mise en oeuvre et ce , par voie sèche ou par voie humide.

Cette opération vise essentiellement à permettre la non adhérence spontanée du matériau sur lui-même ou du matériau sur son emballage.

La membrane d'étanchéité peut recevoir en surface des éléments complémentaires ayant comme objectif soit une protection future de la membrane d'étanchéité une fois installée ou la recherche d'un effet décoratif.

A titre d'exemple, la membrane d'étanchéité pourrait recevoir en surface une feuille d'aluminium, une feuille de cuivre ou de tout autre matériau métallique ou non.

Il peut être appliqué sur la surface de la membrane d'étanchéité des granulats de toutes natures ayant soit un rôle protecteur soit un effet de décoration.

A titre d'exemple, les granulats peuvent être des paillettes d'ardoise, des granules de roches broyées, voire des grains de céramique.

L'adjonction des éléments de surface, feuilles ou granules, peut intervenir avant ou après le refroidissement de la membrane d'étanchéité.

La membrane d'étanchéité obtenue conformément au procédé est destinée à tous les usages traditionnels de l'étanchéité, à savoir : cuvelage, toitures, ouvrages d'art, travaux hydrauliques, etc. sans que cette énumération soit limitative. La membrane d'étanchéité, dans toutes ses applications peut être employée en soudure directe à la flamme ou par collage au bitume à chaud.

L'avantage que procure la membrane d'étanchéité obtenue conformément au procédé est qu'elle soit destinée à tous les emplois décrits ci-dessus, sous tous les climats.

**Revendications**

1/ Procédé de fabrication d'une membrane d'étanchéité à base d'un mélange d'élastomères SBS et plastomères polypropylène atactique et de bitumes de distillation.caractérisé en ce que Les élastomères sont de la famille des styrènes budatiènes dont les plus connus dans le domaine de l'étanchéité sont désignés sous le nom de SBS. Les élastomères interviennent dans une proportion de 5 à 15% du mélange.

Les plastomères sont représentés par la famille d'homopolymères et de copolymères du polypropylène atactique (APP). Les plastomères interviennent pour 6 à 18% du mélange. Les polymères isotactiques (PI ou IPP) en particulier, interviennent dans le mélange dans une proportion jusqu'à 5%.

2/ Procédé selon la revendication 1, caractérisé en ce que le mélange ternaire : bitume /SBS/APP stable, réalise une synthèse du groupe d'élastomères styrène butadiène et des plastomères de la famille du polypropylène.

Les additifs constitués d'huiles spéciales assurant la compatibilité des éléments et la stabilité du mélange et interviennent jusqu'à 15% du mélange.

3/ Procédé selon la revendication 2, caractérisé en ce que la membrane d'étanchéité est collable au bitume à chaud et soudable à la flamme et ne nécéssite pas de protection de surface. Elle est utilisable sous tous les climats des plus froids au plus chauds.

4/ Le procédé suivant les revendications 2 et 3 caractérisé en ce que le mélange ternaire qui a subi une phase de fusion complète des composants est ensuite transféré dans un mélangeur qui permet d'homogénéiser et d'affiner le mélange sans introduction d'air et à une température constante de l'ordre de 200°C.

Le mélange obtenu a comme caractéristiques essentielles :
- bille-anneau ; > à 145°C
- pliage à froid : les températures de non fissuration est au plus égale à -20°C.
- écoulement à la chaleur : > 160°C

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 009 432 (COMPOSANTS INDUSTRIALISES DU BATIMENT) * Revendications 1,5; page 4, lignes 35-36; page 5, lignes 1-5; page 8, lignes 9-17; page 11, exemple 3 * --- | 1,2,3 | C 08 L 95/00 |
| A | US-A-4 368 228 (R. GORGATI) * Colonne 2, lignes 42-57 * --- | 1 | |
| A | DE-A-3 520 942 (HEYEN) ----- | 1 | |

DOMAINES TECHNIQUES RECHERCHES (Int. Cl.4)

C 08 L

Le présent rapport a été établi pour toutes les revendications

| Lieu de la recherche | Date d'achèvement de la recherche | Examinateur |
|---|---|---|
| LA HAYE | 02-02-1989 | BUSCAGLIONE Y. |